**Europäisches Patentamt**

**European Patent Office**

**Office européen des brevets**

(19)

(11) Veröffentlichungsnummer: **0 060 921**
B1

(12) **EUROPÄISCHE PATENTSCHRIFT**

(45) Veröffentlichungstag der Patentschrift:
19.09.84

(21) Anmeldenummer: 81108326.0

(22) Anmeldetag: 14.10.81

(51) Int. Cl.³: **H 04 L 11/00**

(54) **Schaltungsanordnung zum Verbinden von an einer Datenvermittlungsanlage angeschlossenen Telex-Teilnehmerstellen mit ebenfalls an der Datenvermittlungsanlage angeschlossenen Teletex-Teilnehmerstellen.**

(30) Priorität: **19.03.81 DE 3110791**

(43) Veröffentlichungstag der Anmeldung:
**29.09.82 Patentblatt 82/39**

(45) Bekanntmachung des Hinweises auf die Patenterteilung:
**19.09.84 Patentblatt 84/38**

(84) Benannte Vertragsstaaten:
**AT CH IT LI SE**

(56) Entgegenhaltungen:
**EP - A - 0 017 035**
**DE - A - 2 912 652**
**DE - B - 1 298 112**

**PHILIPS TELECOMMUNICATION REVIEW, Band 39, Nr. 2, Juni 1981, Seiten 49-62, Hilversum, NL F.T.A. VAN BERGEN et al.: "A teletex-telex converter"**
**PHILIPS TELECOMMUNICATION REVIEW, Band 39, Nr. 3, September 1981, Seiten 109-117, Hilversum, NL. W.J. VAN DER KAMP: "Teletex-attachment to the DSX-40 private exchange"**

(73) Patentinhaber: **Siemens Aktiengesellschaft, Berlin und München Wittelsbacherplatz 2, D-8000 München 2 (DE)**

(72) Erfinder: **Franz, Dietmar, Ing.grad., Edelweissstrasse 66, D-8039 Puchheim (DE)**
Erfinder: **Torggler, Norbert, Dipl.-Ing., Bellinzonastrasse 7, D-8000 München 71 (DE)**

**Beschreibung**

Die Erfindung bezieht sich auf eine Schaltungsanordnung zum Verbinden von an einer Datenvermittlungsanlage angeschlossenen Telex-Teilnehmerstellen mit ebenfalls an der Datenvermittlungsanlage angeschlossenen Teletex-Teilnehmerstellen, unter Verwendung wenigstens eines an der Datenvermittlungsanlage angeschlossenen Signalumsetzers, in welchem die von den Telex-Teilnehmerstellen abgegebenen digitalen Signale derart umgesetzt werden, daß sie von den in Frage kommenden Teletex-Teilnehmerstellen verarbeitbar sind, und in welchem die von den Teletex-Teilnehmerstellen abgegebenen digitalen Signale derart umgesetzt werden, daß sie von den in Frage kommenden Telex-Teilnehmerstellen verarbeitbar sind.

Eine Schaltungsanordnung der vorstehend bezeichneten Art ist bereits bekannt (DE-A-2 912 649, entspricht der EP-A-0 017 035). Bei der bekannten Schaltungsanordnung werden die von der jeweiligen Teilnehmerstelle abgegebenen digitalen Signale zunächst in dem Signalumsetzer vollständig aufgenommen und zwischengespeichert, woraufhin im Zuge der Ausgabe dieser Signale die eigentliche Signalumsetzung erfolgt. Wenn dabei die für die Aufnahme der digitalen Signale in Frage kommende Teilnehmerstelle gerade nicht erreichbar ist, so daß die betreffenden digitalen Signale nicht abgesetzt werden können, bleiben die digitalen Signale in dem betreffenden Signalumsetzer zwischengespeichert. Dies bedeutet aber, daß der Signalumsetzer dann für die Einbeziehung in weitere Verbindung zwischen Telex-Teilnehmerstellen und Teletex-Teilnehmerstellen blockiert ist.

Um die vorstehend angedeutete Schwierigkeit in Verbindung mit der Blockierung zu vermeiden, könnte man zwar so vorgehen, die maximale Belegungsdauer des Signalumsetzers zu begrenzen. Eine derartige Verfahrensweise kann jedoch dann nicht zum Tragen kommen, wenn es darum geht, die in dem Signalumsetzer zwischengespeicherten digitalen Signale auf keinen Fall verloren gehen zu lassen.

Es ist ferner vorstellbar, die in dem betrachteten Signalumsetzer zwischengespeicherten digitalen Signale bei ihrer Nichtabsetzbarkeit der Teilnehmerstelle wieder zurückzusenden, von der diese digitalen Signale zuvor abgegeben worden sind. Von dieser Maßnahme wird man jedoch mit Rücksicht darauf keinen Gebrauch machen, daß diese Teilnehmerstelle lediglich eine Bestätigung über die Nichterreichbarkeit der als Empfangs-Teilnehmerstelle vorgesehenen Teilnehmerstelle braucht. Überdies kann es aber auch vorkommen, daß die Teilnehmerstelle, welche die erwähnten digitalen Signale zuvor abgegeben hatte, ebenfalls nicht mehr erreichbar ist, beispielsweise infolge Fehlens ihrer Rufnummer (bei Telex-Teilnehmerstellen) oder infolge einer Betriebsstörung. Ferner kann es aus gebührentechnischen Gründen geboten sein, von einem derartigen Zurücksenden der betreffenden Signale abzusehen.

Der Erfindung liegt demgemäß die Aufgabe zugrunde, einen Weg zu zeigen, wie bei einer Schaltungsanordnung der eingangs genannten Art bei Nichtabsetzbarkeit von digitalen Signalen, die von einer sendenden Teilnehmerstelle abzugeben bzw. abgegeben sind, ohne eine starke Belastung des jeweils vorgesehenen Signalumsetzers ausgekommen werden kann, wobei die von der betreffenden sendenden Teilnehmerstelle abgegebenen digitalen Signale nicht verloren gehen sollen.

Gelöst wird die vorstehend aufgezeigte Aufgabe bei einer Schaltungsanordnung der eingangs genannten Art erfindungsgemäß dadurch, daß an der Datenvermittlungsanlage zusätzlich wenigstens eine gesonderte Sende/Empfangseinrichtung angeschlossen ist, die von den Teilnehmerstellen oder von dem jeweiligen Signalumsetzer durch ein Sonderrufsignal und/oder eine Sonderwahlnummer für den Fall ansteuerbar ist, daß von den betreffenden Teilnehmerstellen bzw. von dem jeweiligen Signalumsetzer gerade keine digitalen Signale an die für deren Aufnahme bestimmte Teilnehmerstellen absetzbar sind, daß auf eine solche Ansteuerung der Sende/Empfangseinrichtung hin dieser die gerade nicht absetzbaren digitalen Signale zusammen mit einen Verbindungsaufbau zu der für die Aufnahme der betreffenden digitalen Signale bestimmten Teilnehmerstellen ermöglichenden Zusatzinformation zugeführt werden und daß von der Sende/Empfangseinrichtung anschließend die von dieser aufgenommenen digitalen Signale anhand der Zusatzinformationen an die jeweils in Frage kommende Teilnehmerstelle abgebbar sind.

Die Erfindung bringt den Vorteil mit sich, daß mit relativ geringem schaltungstechnischen Aufwand eine unnötige Blockierung des jeweils vorgesehenen Signalumsetzers bei Nichtabsetzbarkeit von digitalen Signalen vermieden ist, die entweder diesem Signalumsetzer zuzuführen sind oder die bereits in diesem Signalumsetzer zwischengespeichert sind. Bei den jeweiligen Signalumsetzer zuzuführenden Signalen handelt es sich um von einer Telex-Teilnehmerstelle oder von einer Teletex-Teilnehmerstelle abzugebende Signale; bei den im jeweiligen Signalumsetzer zwischengespeicherten Signalen handelt es sich entweder um von einer Telex-Teilnehmerstelle her zugeführte Signale (Fernschreibsignale) oder um sogenannte Quittungssignale, die einer Teletex-Teilnehmerstelle zuzuführen sind. Diese Quittungssignale geben entweder die erfolgte Absetzung (positive Quittungssignale) von zuvor von der betreffenden Teletex-Teilnehmerstelle her erhaltenen digitalen Signalen bei einer Telex-Teilnehmerstelle oder die Nichtabsetzbarkeit solcher Signale (negative Quittungssignale) an. Im zuletzt erwähnten Falle wird lediglich das (negative) Quittungssignal an die in Frage kommende Teletex-Teilnehmerstellen abgegeben, die sodann eine erneute Signalabgabe versuchen kann.

Durch Verwendung von wenigstens zwei zu einem Sammelanschluß gehörenden gesonderten Sende/Empfangseinrichtungen kann auf einfache Weise eine besonders hohe Ausfallsicherheit der erfindungsgemäßen Schaltungsanordnung erzielt werden, und zum anderen können bei in einer Mehrzahl vorgesehenen Signalumsetzern entsprechende Blockierungen bei gleichzeitiger Nichtabsetzbarkeit von digitalen Signalen von den betreffenden Signalumsetzern vermieden werden. Durch die Verwendung des erwähnten Sonderrufsignals und/oder der Sonderrufnummer ist im übrigen in vorteilhafter Weise sichergestellt, daß die jeweils vorgesehene Sende/Empfangseinrichtung lediglich für den gewünschten Einsatzzweck bereitgehalten wird, also nicht durch andere Vorgänge belastet ist. Als Sende/Empfangseinrichtung kann vorzugsweise eine Teletexmaschine oder ein automatisiertes Sende/Empfangsgerät verwendet werden.

Vorzugsweise wird die Sende/Empfangseinrichtung erst nach erfolgter Vornahme einer vorgegebenen Anzahl von vergeblichen Versuchen des Absetzens von digitalen Signalen in der jeweils gewünschten Teilnehmerstelle angesteuert. Hierdurch ergibt sich der Vorteil, daß die Sende/Empfangseinrichtung bei kurzzeitigen Störungen in der für den Empfang von digitalen Signalen jeweils vorgesehenen Teilnehmerstellen nicht angesteuert wird, sondern erst dann, wenn mit einiger Wahrscheinlichkeit darauf geschlossen werden kann, daß die betreffende gewünschte Teilnehmerstelle vorläufig nicht erreichbar ist.

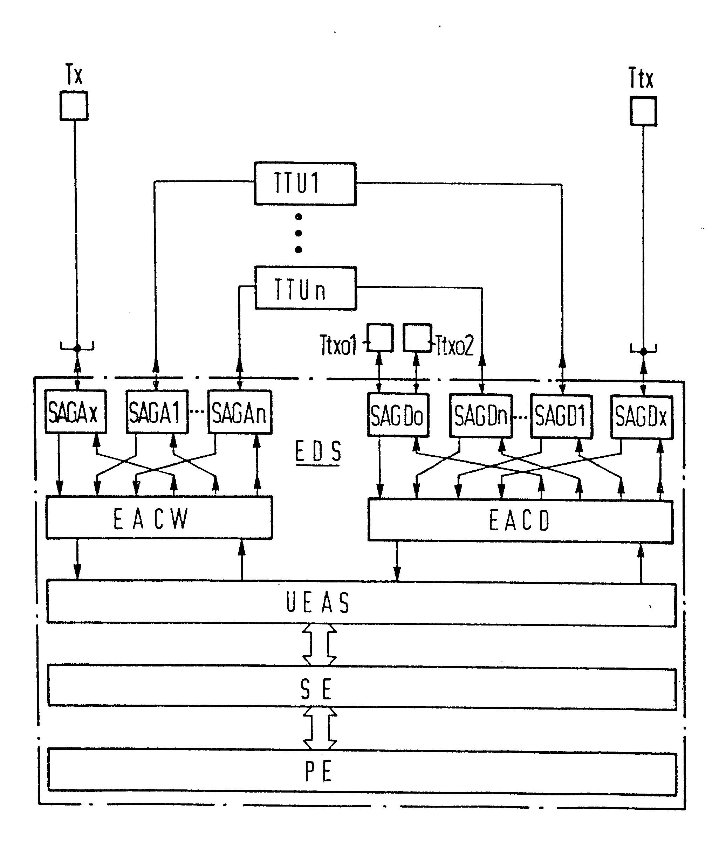

Anhand der Zeichnung wird die Erfindung nachstehend beispielsweise näher erläutert.

In der Zeichnung ist ausschnittweise eine bekannte elektronische Datenvermittlungsanlage EDS dargestellt, bei der es sich tatsächlich um eine Fernschreib- und Datenvermittlungsanlage handelt. Von dieser Datenvermittlungsanlage EDS sind lediglich zu einer ersten Gruppe von Anschlußschaltungen gehörende Anschlußschaltungen SAGAx, SAGA1 bis SAGAn, zu einer zweiten Gruppe von Anschlußschaltungen gehörende Anschlußschaltungen SAGDx, SAGD1 bis SAGDn und SAGDo, sowie den einzelnen Gruppen von Anschlußschaltungen zugehörende Eingabe-/Ausgabe-Codewandler EACW bzw. EACD, eine mit diesen Wandlern verbundene Übertragungsablaufsteuerung UEAS, eine Speichereinheit SE und eine Programmsteuereinheit PE angedeutet. Die mit dem Eingabe-/Ausgabe-Codewandler EACW verbundenen Anschlußschaltungen dienen dazu, digitale Signale polaritätswechselweise zu verarbeiten. Die mit dem anderen Eingabe-/Ausgabe-Codewandler EACD verbundenen Anschlußschaltungen dienen zur Verarbeitung von auch als Envelopes bezeichneten Bitgruppen, die jeweils eine Mehrzahl von Bits, beispielsweise 6 + 2 oder 8 + 2 Bits umfassen. Von diesen Bits dienen sechs bzw. acht Bits als Datenbits, während die übrigen Bits als Statusbit bzw. Synchronisierbit dienen.

Von den in der Zeichnung angedeuteten Anschlußschaltungen sind einige der polaritätswechselverarbeitenden Anschlußschaltungen mit hier als Telex-Teilnehmerstellen bezeichneten Fernschreibmaschinen verbunden, welche digitale Signale mit einer ersten Datenübertragungsrate und in einem ersten Datenformat abgeben und aufnehmen. Diese Telex-Teilnehmerstellen können mit einer Datenübertragungsrate von 50 Bd und unter Ausnutzung des internationalen Telegrafenalphabets Nr. 2 arbeiten, also mit einem Start-Stop-Datenformat. In der Zeichnung ist lediglich eine einzige Telex-Teilnehmerstelle Tx angedeutet, die an der Anschlußschaltung SAGAx angeschlossen ist. Ein in die betreffende Verbindungsleitung eingetragenes Vielfachzeichen soll dabei andeuten, daß an dieser Anschlußschaltung auch noch weitere Telex-Teilnehmerstellen angeschlossen sein können.

Mit einigen der digitale Signale in Form von Bitgruppen bzw. Envelopes verarbeitenden Anschlußschaltungen sind als Teletex-Teilnehmerstellen bezeichnete Sende/Empfangseinrichtungen verbunden, welche digitale Signale seriell in Form von Bitgruppen bzw. Envelopes abgeben bzw. aufnehmen. In der Zeichnung ist lediglich eine derartige Teletex-Teilnehmerstelle Ttx angedeutet, die an der Anschlußschaltung SAGDx angeschlossen ist. Ein in der betreffenden Verbindungsleitung eingetragenes Vielfachzeichen soll dabei andeuten, daß an dieser Anschlußschaltung noch weitere Teletex-Teilnehmerstellen angeschlossen sein können. Diese Teletex-Teilnehmerstellen, die auch als Bürofernschreibstationen bezeichnet werden, arbeiten mit einer Bitfolgerate von 2400 Bit/s. Die mit dieser Bitfolgerate auftretenden digitalen Signale werden als synchrone Datensignale übertragen, d. h. ohne Start-Zeichen und ohne Stop-Zeichen. Überdies sei noch angemerkt, daß der mit Hilfe von Teletex-Teilnehmerstellen bzw. -stationen verarbeitbare Zeichenvorrat größer ist als der Zeichenvorrat, der in den Telex-Stationen verarbeitet werden kann. Dies betrifft insbesondere die Berücksichtigung von Großbuchstaben und einiger Sonderzeichen.

Mit der in der Zeichnung angedeuteten Datenvermittlungsanlage EDS ist eine Anzahl von Signalumsetzern TTU1 bis TTUn verbunden. Der Signalumsetzer TTU1 ist dabei sowohl mit der Anschlußschaltung SAGA1 als auch mit der Anschlußschaltung SAGD1 verbunden. Der Signalumsetzer TTUn ist sowohl mit der Anschlußschaltung SAGAn als auch mit der Anschlußschaltung SAGDn verbunden. Der Aufbau und die Arbeitsweise der betreffenden Signalumsetzer ist im Zusammenhang mit der eingangs erwähnten bekannten Schaltungsanordnung bereits beschrieben worden, weshalb hier darauf näher eingegangen zu werden braucht. Es dürfte hier genügen, darauf hinzuweisen, daß jeder der vorgesehenen Signalumsetzer so ausgelegt ist, daß er die ihm jeweils zugeführten digitalen Signale derart umzusetzen gestattet, daß diese digitalen Signale von der jeweils gewünschten empfangenden Teilnehmerstelle verarbeitet werden können. Dies bedeutet, daß jeder Signalumsetzer von einer Telex-Teilnehmerstelle abgegebene Telex-Signale in von einer Teletex-Teilnehmerstelle verarbeitbare digitale Signale umzusetzen vermag und von einer Teletex-Teilnehmerstelle abgegebene digitale Signale in Telex-Signale umsetzt, die dann von einer Telex-Teinehmerstelle verarbeitbar sind.

Wie oben bereits erwähnt, ist mit dem Eingabe-/Ausgabe-Codewandler EACD unter anderem die Anschlußschaltung SAGDo verbunden. An dieser Anschlußschaltung SAGDo sind im vorliegenden Fall zwei zu einem Sammelanschluß gehörende gesonderte Teletex-Sende-/Empfangseinrichtungen Ttxo1, Ttxo2 angeschlossen. Diese beiden Teletex-Sende-/Empfangseinrichtungen können digitale Signale aufnehmen, die entweder von einer Teletex-Teilnehmerstelle, wie der Teletex-Teilnehmerstelle Ttx, oder von einem der Signalumsetzer TTU1 bis TTUn abgegeben worden sind.

Um den gesonderten Teletex-Sende-/Empfangseinrichtungen Ttxo1, Ttxo2 digitale Signale zuzuführen, müssen diese Einrichtungen zunächst einmal angesteuert werden. Dazu dient ein Sonderrufsignal und/oder eine Sonderrufnummer. Das Sonderrufsignal bzw. die Sonderrufnummer — im folgenden lediglich als Sonderrufsignal bezeichnet — wird erst für den Fall abgegeben, daß die von der betreffenden Teletex-Teilnehmerstelle oder dem jeweiligen Signalumsetzer abzugebenden digitalen Signale nicht bei der gewünschten Empfangs-Teilnehmerstelle abgesetzt werden können, weil diese gerade aus irgendeinem Grunde nicht erreicht werden kann. Bei diesen digitalen Signalen handelt es sich um Daten- bzw.- Informationssignale oder um Quittungssignale, wie dies oben bereits erwähnt worden ist. Dabei kann vorzugsweise so vorgegangen sein, daß das erwähnte Sonderrufsignal erst dann freigegeben wird, nachdem eine vorgegebene Anzahl von aufeinanderfolgenden Versuchen des Absetzens der digitalen Signale erfolglos gewesen ist. Das betreffende Sonderrufsignal wird somit hier den Teletex-Teilnehmerstellen und den Signalumsetzern zur Verfügung stehen. Da die Übertragung von digitalen Signalen von bzw. zu diesen Einrichtungen über die Datenvermittlungsanlage EDS erfolgt, wird vorzugsweise das betreffende Sonderrufsignal von der Datenvermittlungsanlage der jeweils in Frage kommenden Einrichtung bereitgestellt, wenn diese vergeblich versucht hat, digitale Signale abzusetzen. Es ist im übrigen auch möglich, ein Sonderrufsignal den Telex-Teilnehmerstellen zur Verfügung zu stellen. In diesem Fall wäre zumindest eine gesonderte Sende-/Empfangseinrichtung an einer der Anschlußschaltungen SAG A1 bis SAG An, SAG Ax anzuschließen.

Mit dem erwähnten Sonderrufsignal wird eine Verbindung entweder von einer Teletex-Teilnehmerstelle oder von einem Signalumsetzer zu dem die beiden Teletex-Sende-/Empfangseinrichtungen Ttxo1, Ttxo2 umfassenden Sammelanschluß hin hergestellt. Dabei wird jeweils nur eine dieser Einrichtungen in eine Verbindung einbezogen. Ist eine solche Verbindung hergestellt, so werden die in Frage kommenden Signale von der Teletex-Teilnehmerstelle oder dem Signalumsetzer in der betreffenden gesonderten Teletex-Sende-/Empfangseinrichtung Ttxo1 bzw. Ttxo2 aufgenommen und zwischengespeichert. Zusammen mit diesen bei der gewünschten Teilnehmerstelle gerade nicht absetzbaren digitalen Signalen werden der betreffenden Teletex-Sende-/Empfangseinrichtung noch Zusatzinformationen zugeführt, die einen Verbindungsaufbau zu der betreffenden Teilnehmerstelle hin ermöglichen, der die genannten digitalen Signale an sich zuzuführen sind. Im einfachsten Fall handelt es sich bei diesen Zusatzinformationen um die Rufnummerninformation der betreffenden gewünschten Teilnehmerstelle.

Durch die vorstehend erläuterten Maßnahmen ist es somit sichergestellt, daß die Signalumsetzer TTU1 bis TTUn nicht durch lange Zwischenspeicherung der bei der jeweils gewünschten Teilnehmerstelle gerade nicht absetzbaren digitalen Signale blockiert werden. Die erwähnten digitalen Signale werden nämlich entweder diesen Signalumsetzern erst gar nicht zugeführt — und zwar hier in dem Fall, daß die Teletex-Teilnehmerstelle Ttx digitale Signale an die Telex-Teilnehmerstelle Tx auszusenden wünscht, welche jedoch gerade nicht erreichbar ist — oder aber die von diesen Signalumsetzern bei den gewünschten, gerade nicht erreichbaren Teilnehmerstellen abzusetzenden digitalen Signale werden aus diesen Signalumsetzern herausgeführt und in den zu dem Sammelanschluß gehörenden Teletex-Sende-/Empfangseinrichtungen für eine Weiterleitung festgehalten. In diesem Fall sind zwar die Teletex-Sende-/Empfangseinrichtungen des betreffenden Sammelanschlusses kurzzeitig für einen weiteren Zugriff gesperrt; dies ist jedoch längst nicht so störend wie eine dauernde Belegung der Signalumsetzer. Im übrigen kann so vorgegangen sein, daß die Teletex-Sende-/Empfangseinrichtungen nach Aufnahme der ihnen jeweils zugeführten digitalen Signale sofort bereit sind für die Aufnahme von noch weiteren digitalen Signalen, die im Zuge von anderen Verbindungen zwischen verschiedenartigen Teilnehmerstellen zu übertragen sind.

Von der jeweiligen Teletex-Sende-/Empfangseinrichtung Ttxo1, Ttxo2 werden die von dieser zuvor aufgenommenen digitalen Signale an die durch die erwähnten Zusatzinformationen bezeichneten in Frage kommenden Teilnehmerstellen weitergeleitet. Dazu werden von der jeweiligen Teletex-Sende-/Empfangseinrichtung entsprechende Verbindungsversuche unternommen. Sollte es sich dabei herausstellen, daß die gewünschte Teinehmerstelle überhaupt nicht mehr zu erreichen ist, so sind die betreffenden digitalen Signale zumindest in der betreffenden Teletex-Sende-/Empfangseinrichtung erhalten, die zu den zentral vorgesehenen Einrichtungen zu rechnen ist.

Abschließend sei noch angemerkt, daß der in der Zeichnung dargestellten Datenvermittlungsanlage entsprechende Datenvermittlungsanlagen durch Übertragungsleitungen miteinander verbunden sein können. In diesem Fall ist es ohne weiteres möglich, daß die dem oben betrachteten Sammelanschluß entsprechenden Sammelanschlüsse in den verschiedenen Datenvermittlungsanlagen durch unterschiedliche Sonderrufsignale bzw. Rufnummern erreichbar sind.

## Patentansprüche

1. Schaltungsanordnung zum Verbinden von an einer Datenvermittlungsanlage (EDS) angeschlossenen Telex-Teilnehmerstellen (Tx) mit ebenfalls an der Datenvermittlungsanlage (EDS) angeschlossenen Teletex-Teilnehmerstellen (Ttx), unter Verwendung wenigstens eines an der Datenvermittlungsanlage (EDS) angeschlossenen Signalumsetzers (TTU1, TTUn), in welchem die von den Telex-Teilnehmerstellen (tx) abgegebenen digitalen Signale derart umgesetzt werden, daß sie von den in Frage kommenden Teletex-Teilnehmerstellen (Ttx) verarbeitbar sind, und in welchem die von den Teletex-Teilnehmerstellen (Ttx) abgegebenen digitalen Signale derart umgesetzt werden, daß sie von den in Frage kommenden Telex-Teilnehmerstellen (Tx) verarbeitbar sind, dadurch gekennzeichnet, daß an der Datenvermittlungsanlage (EDS) zusätzlich wenigstens eine gesonderte Sende-/Empfangseinrichtung (Ttxo1, Ttxo2) angeschlossen ist, die von den Teilnehmerstellen (Ttx) oder von dem jeweiligen Signalumsetzer (TTU1 bis TTUn) durch ein Sonderrufsignal und/oder eine Sonderrufnummer für den Fall ansteuerbar ist, daß von den betreffenden Teilnehmerstellen (Ttx) bzw. von dem jeweiligen Signalumsetzer (TTU1 bis TTUn) gerade keine digitalen Signale an die für deren Aufnahme bestimmten Teilnehmerstellen (Tx, Ttx) absetzbar sind, daß auf eine solche Ansteuerung der jeweiligen Sende-/Empfangseinrichtung (Ttxo1, Ttxo2) hin dieser die gerade nicht absetzbaren digitalen Signale zusammen mit einen Verbindungsaufbau zu der für die Aufnahme der betreffenden digitalen Signale bestimmten Teilnehmerstelle (Tx, Ttx) ermöglichenden Zusatzinformationen zugeführt werden und daß von der betreffenden Sende-/Empfangseinrichtung (Ttxo1, Ttxo2) anschließend die von dieser aufgenommenen digitalen Signale anhand der Zusatzinformationen an die jeweils in Frage kommende Teilnehmerstelle (Tx, Ttx) abgebbar sind.

2. Schaltungsanordnung nach Anspruch 1, dadurch gekennzeichnet, daß ein Sammelanschluß von Sende-/Empfangseinrichtungen (Ttxo1, Ttxo2) erst nach erfolgter Vornahme einer vorgegebenen Anzahl von vergeblichen Versuchen des Absetzens von digitalen Signalen in der jeweils gewünschten Teilnehmerstelle (Tx, Ttx) angesteuert wird.

## Claims

1. Circuit arrangement for connecting telex subscriber stations (Tx) connected to a data exchange installation (EDS) to teletex subscriber stations (Ttx) likewise connected to the data exchange installation (EDS), using at least one signal converter (TTU1—TTUn) which is connected to the data exchange installation (EDS) and in which the digital signals emitted from the telex subscriber stations (Tx) are converted in such manner that they can be processed by the teletex subscriber stations (Ttx) in question and in which the digital signals emitted from the teletex subscriber stations (Ttx) are converted in such manner that they can be processed by the telex subscriber stations (Tx) in question, characterized in

that the data exchange installation (EDS) is additionally connected to at least one special transmitting/receiving device (Ttxo1, Ttxo2) which can be driven by the subscriber stations (Ttx) or by the respective signal converter (TTU1 to TTUn) by means of a special call signal and/or a special call number in the event that digital signals cannot be currently deposited from the relevant subscriber stations (Ttx) or signal converter (TTU1 to TTUn) in the subscriber stations (Tx, Ttx) specified to receive such signals,

that in response to this operation of the respective transmitting/receiving device (Ttxo1, Ttxo2), the latter is supplied with the digital signals which cannot be currently deposited together with items of additional information which facilitate a connection establishment to the subscriber station (Tx, Ttx) specified to receive the digital signals in question,

and that the digital signals received by the transmitting/receiving device (Ttxo1, Ttxo2) in question can subsequently be emitted from said device, on the basis of the items of additional information, to the subscriber station (Tx, Ttx) in question.

2. Circuit arrangement as claimed in claim 1, characterized in that a collective number group of transmitting/receiving devices (Ttxo1, Ttxo2) is operated only following a predetermined number of unsuccessful attempts to deposit digital signals in the respective desired subscriber station (Tx, Ttx).

## Revendications

1. Circuit pour relier des postes d'abonnés au télex (Tx) reliés à une installation de commutation de données (EDS) avec des postes d'abonnés aux téletextes (Ttx) également reliés à l'installation de commutation de données (EDS), avec la mise en œuvre d'au moins un convertisseur de signaux (TTU1—TTUn) relié à l'installation de commutation de données (EDS), et dans lequel les signaux numériques émis par les postes d'abonnés au télex (Tx) sont convertis de telle manière qu'ils sont susceptibles d'être traités par les postes d'abonnés aux téletextes concernés (Ttx), et dans lequel les signaux numériques émis par les postes d'abonnés aux téletextes (Ttx) sont convertis de telle manière qu'ils sont susceptibles d'être traités par les postes d'abonnés au telex (Tx) concernés, caractérisé par le fait

qu'à l'installation de commutation de données (EDS) est, de plus, relié au moins un dispositif émission/réception (Ttxo1, Ttxo2) particulier qui est susceptible d'être commandé, par les postes d'abonnés (Ttx) ou par le convertisseur de signaux concerné (TTU1 à TTUn), par un signal d'appel particulier et/ou par un numéro d'appel particulier pour le cas où les postes d'abonnés concernés (Ttx) ou le convertisseur de signaux concerné (TTU1 à TTUn) ne sont justement pas susceptibles d'émettre des signaux numériques aux postes d'abonnés destinés à leur réception, qu'à la suite d'une telle commande du dispositif émission/réception (Ttxo1, Ttxo2) concerné, on applique à celui-ci les signaux numériques qui ne sont pas susceptibles d'être émis, avec des informations supplémentaires qui permettent l'établissement d'une liaison vers le poste d'abonné (Tx, Ttx) destiné à la réception des signaux numériques en question,

et qu'ensuite, du dispositif émission/réception (Ttxo1, Ttxo2) les signaux numériques reçus par ce dernier, sont susceptibles d'être émis, avec les informations supplémentaires, au poste d'abonné concerné (Tx, Ttx).

2. Circuit selon la revendication 1, caractérisé par le fait qu'une ligne groupée de dispositifs émission/réception (Ttxo1, Ttxo2) n'est commandée dans le poste d'abonné (Tx, Ttx) souhaité, qu'après l'exécution d'un nombre prédéterminé des tentatives infructueuses d'émission de signaux numériques.